# EUROPÄISCHE PATENTSCHRIFT

(11) **EP 0 872 942 B1**
(45) Veröffentlichungstag und Bekanntmachung des Hinweises auf die Patenterteilung: **24.11.2004**
(21) Anmeldenummer: 98106024.7
(22) Anmeldetag: 02.04.1998
(51) Int. Cl.: H02J 3/30

(54) **System zur Stabilisierung eines Stromversorgungsnetzes**
System for stabilising a power supply network
Système pour la stabilization d'un réseau d'alimentation en puissance

(30) Priorität: 14.04.1997 DE 19715468
(43) Veröffentlichungstag der Anmeldung: 21.10.1998
(60) Teilanmeldung: 02014398.8
(73) Patentinhaber: RWE Piller GmbH, 37520 Osterode am Harz (DE)
(72) Erfinder: Briest, Ralf, Dr., 37520 Osterode (DE); Darrelmann, Hilmar, 37520 Osterode (DE); Sachs, Klaus, 37520 Osterode (DE); Schrader-Hausmann, Uwe, 37520 Osterode (DE)
(74) Vertreter: HOEGER, STELLRECHT & PARTNER Patentanwälte

(56) Entgegenhaltungen:
- EP-A- 0 220 713
- DE-A- 2 853 207
- DE-A- 3 931 800

## Beschreibung

Die Erfindung betrifft ein System zur Stabilisierung eines Stromversorgungsnetzes umfassend eine Drossel, welche das Stromversorgungsnetz mit einem Stromeinspeisenetz verbindet, ein an das Stromversorgungsnetz angeschlossenes Umformersystem mit einer einen Läufer und mindestens eine Drehstromwicklung aufweisenden Umformermaschine, daß das Umformersystem einen Schwungradspeicher mit einer elektrischen Maschine und einem mit dieser gekoppelten Schwungrad umfaßt, daß in dem Umformersystem der Schwungradspeicher so mit der Umformermaschine elektrisch gekoppelt ist, daß der Schwungradspeicher Leistung von der Umformermaschine aufnehmen oder an diese abgeben kann,

Ein derartiges mit einer Gleichstrommaschine zum Antreiben eines Schwungrades arbeitendes System ist beispielsweise aus der DE-A-2041924 bekannt. Dieses System stellt jedoch lediglich eine unvollständige Stabilisierung des Stromversorgungsnetzes dar, da dieses nur eingeschränkt in der Lage ist, Spannungsabfälle im Stromversorgungsnetz abzufangen.

Der Erfindung liegt daher die Aufgabe zugrunde, ein System zur Stabilisierung eines Stromversorgungsnetzes zu schaffen, welches in der Lage ist, die Spannung im Stromversorgungsnetz auf einen bestimmten Wert zu stabilisieren.

Diese Aufgabe wird bei einem System der eingangs beschriebenen Art erfindungsgemäß dadurch gelöst, daß das Umformersystem ein Umrichtersystem aufweist, das eine Drehstromwicklung der Umformermaschine mit einer Synchronmaschine des Schwungradspeichers elektrisch koppelt, und daß eine Steuerung vorgesehen ist, welche die Spannung des Stromversorgungsnetzes und des Stromeinspeisenetzes erfaßt und das Umrichtersystem so ansteuert, daß die Umformermaschine durch Leistungsaufnahme oder Leistungsabgabe die Spannung des Stromversorgungsnetzes auf einen vorgebbaren Wert stabilisiert.

Das erfindungsgemäße System hat den Vorteil, daß dieses in der Lage ist, sowohl Leistung aus dem Stromversorgungsnetz aufzunehmen als auch an dieses Abzugeben und somit jede Art von Leistungsschwankungen im Stromversorgungsnetz auszugleichen und die Spannung hinsichtlich Effektivwert und Phasenlage vollständig zu stabilisieren.

Eine gute Stabilisierung des Stromversorgungsnetzes muß dabei in der Lage sein, in kurzen Intervallen Leistung aufzunehmen und Leistung abzugeben. Dies wird erfindungsgemäß durch einen Schwungradspeicher erreicht, welcher hierzu aufgrund seiner hohen Wechsellastfestigkeit bei langer Lebensdauer prädestiniert ist, wobei dessen Kombination mit dem Umrichtersystem den weiteren Vorteil bietet, daß schnelle Wechsel zwischen Leistungsaufnahme und Leistungsabgabe möglich sind.

Hinsichtlich der im erfindungsgemäßen System eingesetzten Steuerung ist vorgesehen, daß die Steuerung die Spannung im Stromeinspeisenetz und die Spannung im Stromversorgungsnetz erfaßt und vergleicht. Damit ist die Steuerung in der Lage, auch die Spannungs- und Phasendifferenz zwischen dem Stromversorgungsnetz und dem Stromeinspeisenetz zu erfassen und die von dem Umrichtersystem bewirkte Leistungskapplung zwischen dem Schwungradspeicher und der Umformermaschine genau zu steuern.

Insbesondere erfolgt eine derartige Steuerung der Leistungskopplung durch eine Vorgabe eines Zündwinkels für die Umrichter.

Ein besonders günstiger Aufbau der Steuerung sieht dabei vor, daß diese noch zusätzlich den Strom im Gleichstromzwischenkreis des jeweiligen Umrichterkreises zur Steuerung heranzieht.

Das Umrichtersystem kann prinzipiell beliebig ausgebildet sein, so lange es schnell und zuverlässig einen Wechsel zwischen Leistungsaufnahme und Leistungsabgabe des Schwungradspeichers ermöglicht. Eine besonders günstige Lösung sieht dabei vor, daß das Umrichtersystem mindestens einen Umrichterkreis mit zwei über einen Gleichstromzwischenkreis gekoppelten Umrichtern umfaßt. Ein derartiges Umrichtersystem läßt sich einfach betreiben und erlaubt außerdem die Möglichkeit, bei hervorragender Regelbarkeit die von dem Schwungradspeicher aufgenommene oder abgegebene Leistung mit der erforderlichen Genauigkeit, die für eine gute Stabilisierung notwendig ist, zu regeln.

Um dabei im einfachsten Fall mit einem Umrichterkreis arbeiten zu können, ist vorzugsweise vorgesehen, daß jeder der Umrichter zwischen einer Gleichrichtertunktion und einer Wechselrichterfunktion umsteuerbar ist. Damit ist sowohl die Leistungsaufnahme als auch die Leistungsabgabe des Schwungradspeichers in einfacher Weise steuerbar.

Um Fehlfunktionen des Umrichterkreises zu vermeiden ist vorzugsweise vorgesehen, daß die Umrichter durch die Steuerung nur so ansteuerbar sind, daß in einem Umrichterkreis einer der Umrichter in Gleichrichterfunktion und der andere in Wechselrichterfunktion arbeitet. Damit ist eine stetige Funktionsbereitschaft des Umrichterkreises, entweder für die Leistungsaufnahme oder für die Leistungsabgabe, sichergestellt.

Aufgrund der Umschaltbarkeit der Umrichter eines Umrichterkreises ist es prinzipiell ausreichend, wenn das Umrichtersystem mit einem Umrichter arbeitet.

Eine vorteilhafte Ausführungsform sieht jedoch vor, daß das Umrichtersystem mehrere parallel geschaltete Umrichterkreise umfaßt. Bei dieser Lösung wäre es prinzipiell nicht notwendig, die Umrichterkreise so auszubilden, daß die Umrichter jeweils umsteuerbar sind. Es wäre beispielsweise möglich, einen Umrichterkreis so auszulegen, daß er nur zur Leistungsabgabe des Schwungradspeichers einsetzbar ist, und den anderen Umrichterkreis so auszubilden, daß er nur zur Leistungsaufnahme des Schwungradspeichers einsetzbar ist.

Besonders vorteilhaft ist es jedoch, wenn auch jeder der Umrichterkreise des Umrichtersystems mit umsteuerbaren Umrichtern versehen ist, da damit beispielsweise die Möglichkeit geschaffen ist, ein redundantes System aufzubauen, das beispielsweise auch bei Ausfall eines Umrichterkreises noch funktioniert.

Eine weitere vorteilhafte Lösung sieht vor, daß die Umrichter eines Umrichterkreises von der Steuerung bevorzugt zur Leistungsabgabe an die Umformermaschine oder Leistungsaufnahme von der Umformermaschine einsetzbar sind. Diese bevorzugte Einsetzbarkeit schließt jedoch eine Umsteuerbarkeit der Umrichter der Umrichterkreise nicht aus. So ist die Umsteuerbarkeit für das Erhalten einer Redundanz des Systems vorteilhaft einsetzbar.

Es ist aber auch bei mehreren Umrichterkreisen vorteilhafterweise denkbar, diese so auszulegen, daß sie lediglich in der Lage sind, die halbe maximale Wirkleistung zu koppeln, so daß so lange, solange lediglich die halbe maximale Wirkleistung von dem Schwungradspeicher in die Umformermaschine oder umgekehrt gekoppelt werden muß, die Umrichterkreise in ihrem bevorzugten Arbeitsmodus einsetzbar sind, während dann, wenn eine Leistung von der Umformermaschine zum Schwungradspeicher oder umgekehrt gekoppelt werden muß, die größer als die halbe maximale Wirkleistung ist, die Umrichter des einen Umrichterkreises umgesteuert werden, so daß in diesem Fall dann beide Umrichterkreise parallel arbeiten. Ein derartiges System hat außerdem noch den Vorteil, daß es dann auch bis zur halben maximalen Wirkleistung redundant arbeiten kann, das heißt bei Ausfall eines Umrichterkreises zumindest eine Stabilisierung des Stromversorgungsnetzes in den Fällen möglich ist, in denen maximale die halbe maximale Wirkleistung erforderlich ist.

Ferner ist vorzugsweise vorgesehen, daß in dem Gleichstromzwischenkreis jedes Umrichterkreises eine Drossel angeordnet ist. Eine derartige Drossel hat den Vorteil, daß mit dieser Stromänderungen durch Unterschiede der Spannungsmomentanwerte, die durch das Schalten oder Umsteuern der beiden Umrichter bedingt sind, minimiert werden können.

Im Zusammenhang mit der bisherigen Erläuterung des erfindungsgemäßen Systems wurde lediglich davon ausgegangen, daß eine Drossel zwischen dem Stromeinspeisenetz und dem Stromversorgungsnetz vorgesehen ist. Eine besonders vorteilhafte Lösung sieht dabei vor, daß die Drossel zwischen dem Stromeinspeisenetz und dem Stromversorgungsnetz als Koppeldrossel ausgebildet ist und daß die Umformermaschine mit einem Zwischenabgriff der Koppeldrossel verbunden ist. Eine derartige Koppeldrossel hat den Vorteil, daß sie die Auswirkungen von Spannungsänderungen im Stromeinspeisenetz für das Stromversorgungsnetz selbst teilweise kompensiert und damit die Wirkung der Umformermaschine zur Stabilisierung der Spannung im Stromversorgungsnetz unterstützt.

Eine besonders zweckmäßige Lösung sieht dabei vor, daß die Gegenreaktanz der Koppeldrossel ungefähr der subtransienten Reaktanz der Umformermaschine entspricht. In diesem Fall ist eine optimale Anpassung zwischen Umformermaschine und Koppeldrossel erreicht, so daß die Koppeldrossel die Wirkung der Umformermaschine zur Stabilisierung des Stromversorgungsnetzes optimal unterstützt.

Hinsichtlich der Steuerbarkeit der erfindungsgemäßen Umformermaschine wurden im Zusammenhang mit der bisherigen Erläuterung der erfindungsgemäßen Lösung keine näheren Angaben gemacht. So sieht ein vorteilhaftes Ausführungsbeispiel vor, daß die von der Umformermaschine erzeugte Spannung über eine Erregerwicklung des Läufers steuerbar ist, wobei über diese Erregerwicklung des Läufers der Betrag der Spannung, nicht jedoch deren Phasenwinkel, steuerbar ist. Die Steuerung des Phasenwinkels erfolgt in der bereits beschriebenen Weise über die genaue Steuerung des Umrichtersystems, insbesondere die Steuerung der Zündwinkel in diesem.

Um die Erregung der Umformermaschine besonders günstig lösen zu können, ist vorgesehen, daß die Erregerwicklung bürstenlos erregbar ist.

Zur Steuerung der von der Umformermaschine erzeugte Spannung ist vorzugsweise vorgesehen, daß die Erregung der Umformermaschine entsprechend der Spannung im Stromversorgungsnetz gesteuert ist.

Vorzugsweise ist diese Steuerung der Erregung der Umformermaschine unabhängig von der Steuerung für das Umrichtersystem, so daß unabhängig von dem Arbeiten des Umrichtersystems eine selbständige Steuerung der Umformermaschine, insbesondere sogar in Form einer Regelung, möglich ist.

Hinsichtlich des Aufbaus der Umformermaschine selbst wurden im Zusammenhang mit der bisherigen Erläuterung der einzelnen Ausführungsbeispiele keine näheren Angaben gemacht. So sieht ein vorteilhaftes Ausführungsbeispiel vor, daß die Umformermaschine eine einzige Drehstromwicklung aufweist, welche mit dem Stromversorgungsnetz und mit dem Umrichtersystem verbunden ist. Dies ist die einfachste Möglichkeit des Aufbaus einer derartigen Umformermaschine, welche jedoch hinsichtlich der Qualität der im Stromversorgungsnetz anliegenden Spannung Nachteile aufweist, insbesondere da diese mit Spitzen und Einbrüchen aufgrund des Schaltens des Umrichtersystems behaftet ist.

Aus diesem Grund sieht eine weitere vorteilhafte Lösung vor, daß die Umformermaschine eine erste und eine zweite Drehstromwicklung aufweist, so daß jeweils das Stromversorgungsnetz mit einer Drehstromwicklung und der Schwungradspeicher mit der anderen Drehstromwicklung koppelbar sind.

Dabei ist es besonders günstig, wenn die erste Drehstromwicklung und die zweite Drehstromwicklung dieselbe Polzahl aufweisen.

Prinzipiell kann eine derartige Umformermaschine mit zwei Drehstromwicklungen in Form zweier mechanisch über eine Welle miteinander gekoppelter Maschinen aufgebaut sein. Diese Lösung hat zwar hinsichtlich der Baugröße der Maschine Nachteile. Sie hat jedoch aber auch Vorteile, da beispielsweise die mit dem Stromversorgungsnetz gekoppelte Drehstromwicklung als Wicklung für Hochspannung ausgebildet sein kann, während die andere Drehstromwicklung für Mittel- oder Niederspannung ausgelegt sein kann.

Ein besonderer Vorteil zweier Drehstromwicklungen ist unabhängig von der Frage der anliegenden Spannung insbesondere aber auch darin zu sehen, daß dadurch eine galvanische Entkopplung des Stromversorgungsnetzes und des Umrichtersystems mit dem Schwungradspeicher möglich ist.

Hinsichtlich der Baugröße und der Wirkungsweise ist es besonders günstig, wenn die erste Drehstromwicklung und die zweite Drehstromwicklung in einem gemeinsamen Ständerpaket angeordnet sind. Eine derartige Lösung hat den großen Vorteil, daß einerseits die Maschine im Verhältnis zur erforderlichen Leistung klein baut und außerdem noch einen kleinen Innenwiderstand aufweist.

Vorzugsweise erfolgt bei einer derartigen Lösung gar keine Umwandlung der in der einen Drehstromwicklung zugeführten Leistung in mechanische Energie und dann wieder eine Rückwandlung von mechanischer Energie in elektrische Energie in der anderen Drehstromwicklung, es erfolgt vielmehr eine direkte transformatorische Übertragung der elektrischen Energie durch Flußverkettung zwischen den beiden Drehstromwicklungen.

Eine besonders günstige Lösung sieht dabei vor, daß die erste Drehstromwicklung und die zweite Drehstromwicklung in gesonderten Nuten angeordnet sind.

Eine weitere vorteilhafte Lösung der erfindungsgemäßen Umformermaschine sieht vor, daß der Läufer eine Dämpferwicklung aufweist. Eine derartige Dämpferwicklung hat den Vorteil, daß sie die Oberwellen der anliegenden Spannung wirkungsvoll kurzschließt und damit im Fluß eliminiert, so daß nur die Grundfrequenz von der einen Drehstromwicklung auf die andere Drehstromwicklung übertragen wird.

Hinsichtlich der Ausbildung des Schwungradspeichers selbst wurden im Zusammenhang mit der bisherigen Beschreibung der einzelnen Lösungen keine näheren Angaben gemacht. So sieht ein vorteilhaftes Ausführungsbeispiel vor, daß der Schwungradspeicher ein um eine vertikale Achse rotierendes Schwungrad aufweist. Eine derartige Anordnung des Schwungrades hat hinsichtlich der Lagerung desselben Vorteile, da die Möglichkeit besteht, das Schwungrad in axialer Richtung lediglich durch ein Lager abzustützen. So sieht eine vorteilhafte Möglichkeit vor, daß das Schwungrad in Richtung seiner Drehachse in einem Lager gehalten ist, wobei dieses Lager beispielsweise ein im Bereich eines unteren Endes einer das Schwungrad tragenden Welle vorgesehenes Lager sein kann.

Alternativ dazu ist vorteilhafterweise vorgesehen, daß das Schwungrad hängend angeordnet ist, das heißt, daß das Schwungrad in Richtung seiner Drehachse abstützende Lager vertikal oberhalb des Schwungrades liegt, diese Lagerung des Schwungrades läßt sich auch bei hohen Drehzahlen des Schwungrades einfach stabilisieren.

Das das Schwungrad in axialer Richtung stabilisierende Lager kann prinzipiell als Gleitlager ausgebildet sein.

Alternativ dazu sieht jedoch ein vorteilhaftes Ausführungsbeispiel vor, daß dieses Lager als Magnetlager ausgebildet ist, welches den Vorteil hat, das geringere Lagerreibungskräfte auftreten.

Eine besonders günstige Lösung, insbesondere auch im Hinblick auf die Auswahlsicherheit sieht vor, daß das Magnetlager als passives Magnetlager ausgebildet ist.

Hinsichtlich der Anordnung eines Läufers der Synchronmaschine relativ zum Schwungrad wurden bislang keine näheren Angaben gemacht. So sieht ein vorteilhaftes Ausführungsbeispiel vor, daß ein Läufer der Synchronmaschine direkt auf einer Welle des Schwungrades sitzt, so daß keine Getriebeelemente zwischen diesen beiden nötig und erforderlich sind und somit eine besonders einfache und funktionsstabile Einheit entsteht.

Besonders günstig ist es hierbei, wenn das Schwungrad auf einer dem Magnetlager gegenüberliegenden Seite des Läufers angeordnet ist, so daß sowohl der Läufer als auch das Schwungrad relativ zum Magnetlager hängend angeordnet sind und somit eine einfache Stabilisierung auch hinsichtlich der Kippmomente erhältlich ist.

Ferner ist die Synchronmaschine vorzugsweise mit einer dieser zugeordneten Erregermaschine versehen, welche ebenfalls die Möglichkeit bietet, die Erregung der Synchronmaschine zu steuern und somit auch die aus dieser entnommene oder dieser zugeführte Leistung exakt zu steuern.

Im Zusammenhang mit der bisherigen Erläuterung der einzelnen Ausführungsbeispiele des erfindungsgemäßen Systems wurde auf den primären Einsatzzweck dieses Systems, nämlich die Stabilisierung einer Spannung in einem Stromversorgungsnetz abgestellt.

Das erfindungsgemäße System kann aber auch noch zusätzlich so ausgebildet sein, daß das Umformersystem bei Ausfall einer Stromeinspeisung durch das Stromeinspeisenetz die gesamte im Stromversorgungsnetz verbrauchte Leistung liefert, das heißt, daß in diesem Fall das Umformersystem noch gleichzeitig als unterbrechungsfreie Stromversorgung für das Stromversorgungsnetz zumindest in einem bestimmten Zeitintervall zur Verfügung steht. In diesem Fall ist es erforderlich, den Schwungradspeicher entsprechend der im Stromversorgungsnetz zugelassenen Last zu dimensionieren.

Damit liefert das erfindungsgemäße System nicht nur eine ständige Stabilisierung der Spannung im Stromversorgungsnetz bei funktionierendem Stromeinspeisenetz, sondern ist auch in der Lage, selbst einen Ausfall des Stromeinspeisenetzes für einen bestimmten Zeitraum zu überbrücken.

Soll eine lang andauernde Überbrückung eines Ausfalls des Stromeinspeisenetzes vorgesehen sein, so kann das erfindungsgemäße System auch noch dahingehend erweitert werden, daß die Umformermaschine des Umformersystems mit einem motorischen Antrieb, beispielsweise einem Dieselmotor koppelbar ist, welcher dann durch Antreiben des Läufers der Umformermaschine diese als Generator betreibt, welcher die Spannung für das Stromversorgungsnetz liefert. Dabei dient das Umformersystem aber nach wie vor immer noch zur Stabilisierung der Spannung in dem Stromversorgungsnetz, wobei insbesondere das Umrichtersystem und der Schwungradspeicher in der Lage sind, einerseits Lastwechsel im Stromversorgungsnetz auszugleichen oder andererseits auch Leistungsschwankungen des die Umrichtermaschine antreibenden Motors auszugleichen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

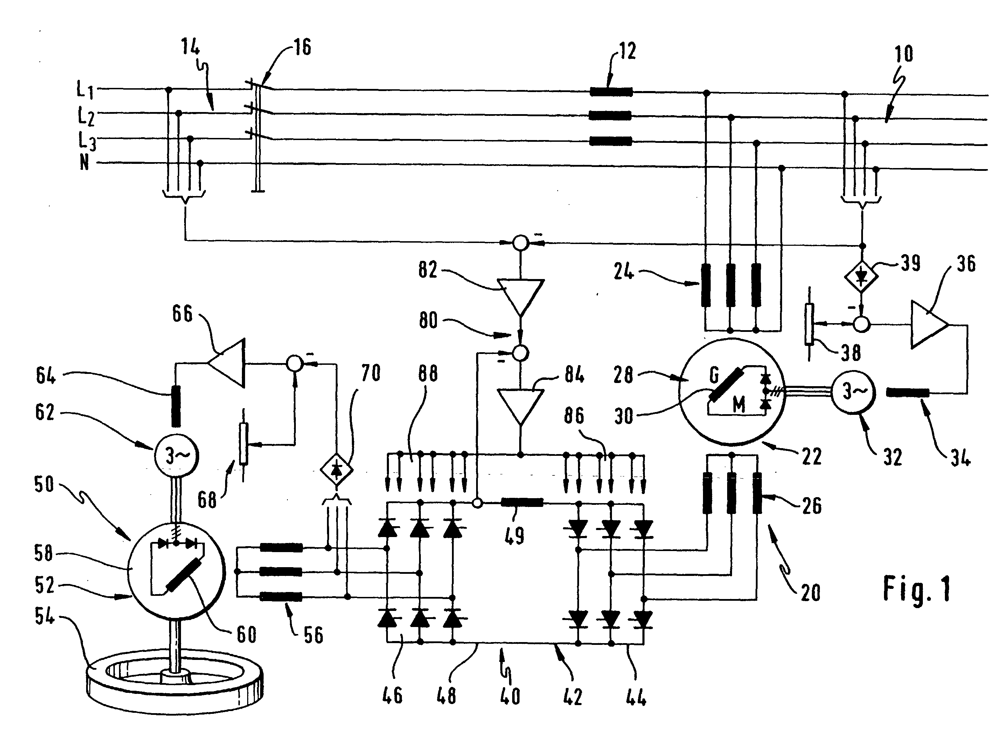

- Fig. 1: eine schematische Darstellung eines ersten Ausführungsbeispiels eines erfindungsgemäßen Systems;
- Fig. 2: einen vertikalen Schnitt durch eine schematische Darstellung eines bevorzugten Ausführungsbeispiels eines erfindungsgemäßen Schwungradspeichers;
- Fig. 3: einen vertikalen Längsschnitt durch ein bevorzugtes Ausführungsbeispiel einer erfindungsgemäßen Umformermaschine;
- Fig. 4: einen Schnitt längs Linie 4-4 in Fig. 3 mit Darstellung der Drehstromwicklungen;
- Fig. 5: eine schematische Darstellung ähnlich Fig. 1 eines zweiten Ausführungsbeispiels;
- Fig. 6: eine schematische Darstellung ähnlich Fig. 1 eines dritten Ausführungsbeispiels;
- Fig. 7: eine schematische Darstellung ähnlich Fig. 1 eines vierten Ausführungsbeispiels und
- Fig. 8: eine schematische Darstellung ähnlich Fig. 1 eines fünften Ausführungsbeispiels.

Ein erstes Ausführungsbeispiel eines erfindungsgemäßen Systems zur Stabilisierung eines Stromversorgungsnetzes 10, welches mittels einer Drossel 12 mit einem Stromeinspeisenetz 14 verbunden ist, umfaßt ein als Ganzes mit 20 bezeichnetes Umformersystem, welches eine Umformermaschine 22 aufweist.

Die Umformermaschine 22 weist ihrerseits eine erste Drehstromwicklung 24 und eine zweite Drehstromwicklung 26 auf, sowie einen Läufer 28, welcher mit einer Erregerwicklung 30 versehen ist. Die Erregerwicklung 30 ist vorzugsweise als Gleichstromwicklung ausgebaut, welche über eine Erregermaschine 32 mit einer stationären Gleichstromwicklung 34 erregbar ist.

Die einen Feldstrom für die Erregung der Umformermaschine 32 liefernde Gleichstromwicklung 34 ist von einem Spannungsregler 36 angesteuert, welcher einerseits einen von einem Sollwertgeber 38 vorgegebenen Spannungssollwert erfaßt und andererseits über ein Spannungsdetektor 39 die Spannung des Stromversorgungsnetzes 10 detektiert.

Die zweite Drehstromwicklung 26 ist mit einem als Ganzes mit 40 bezeichneten Umrichtersystem verbunden, welches beispielsweise einen Umrichterkreis 42 umfaßt, der mit einem mit der zweiten Drehstromwicklung 26 verbundenen Umrichter 44 und einem Umrichter 46 versehen ist, wobei beide Umrichter 44, 46 über einen Gleichstromzwischenkreis 48 gekoppelt sind. In dem Gleichstromkreis 48 ist ferner noch eine Drossel 49 vorgesehen.

Die Drossel 49 im Gleichstromkreis 40 dient dazu, Stromänderungen und somit Unterschiede der Spannungsmomentanwerte, bedingt durch das Schalten der beiden Umrichter, auszugleichen.

Der Umrichter 46 ist seinerseits mit einem als Ganzes mit 50 bezeichneten Schwungradspeicher versehen, welcher eine Synchronmaschine 52 und ein mit dieser gekoppeltes Schwungrad 54 aufweist.

Die Synchronmaschine 52 umfaßt dabei eine stationäre Drehstromwicklung 56 sowie einen Läufer 58 mit einer Erregerwicklung 60, welche über eine Erregermaschine 62 bürstenlos mit Gleichstrom beaufschlagbar ist. Die Erregermaschine 62 umfaßt dabei eine stationäre Gleichstromwicklung 64 zur Steuerung des Erregerstroms in der Erregerwicklung 60.

Zur Beaufschlagung der Gleichstromwicklung 64 ist eine Erregerregelung 66 vorgesehen, welche einerseits einen von einem Sollwertgeber 68 vorgebbaren Spannungssollwert mit der Spannung an der Drehstromwicklung 56 vergleicht, welche über einen Spannungsdetektor 70 erfaßbar ist.

Das Umrichtersystem 40 ist seinerseits mit einer als Ganzes mit 80 bezeichneten Steuerung ansteuerbar, welche einen Frequenzregler 82 aufweist, der die Spannung des Stromversorgungsnetzes 10 und die Spannung des Stromeinspeisenetzes 14 erfaßt und vergleicht und ferner einen diesem nachgeschalteten Stromregler 84 welcher einen Strom im Gleichstromzwischenkreis 48 zusätzlich zum Ausgangssignal des Frequenzreglers 82 erfaßt und seinerseits Zündsteuerungen 86 und 88 für die Umrichter 44 und 46 ansteuert. Über die Zündeinrichtungen 86 und 88 ist jeweils festlegbar, daß einer der Umrichter 44 oder 46 als Gleichrichter und der andere Umrichter 46 oder 44 als Wechselrichter arbeitet und ferner ist über die Zündeinrichtungen 86 und 88 noch einen Zündwinkel beiden Umrichtern vorgebbar.

Das erfindungsgemäße System funktioniert nun so, daß das von dem Stromeinspeisenetz 14 über die Drosseln 12 gespeiste Stromversorgungsnetz dadurch stabilisiert wird, daß das Umformersystem 20 aus dem Stromversorgungsnetz 10 entweder Leistung entnimmt oder diesem Leistung zuführt, je nachdem, in welcher Richtung sich eine Änderung der zu stabilisierenden Spannung des Stromversorgungsnetzes 10 ergibt. Wird beispielsweise die vom Stromeinspeisenetz 14 zugeführte Spannung niedriger, so führt das Umformersystem 20 dem Stromversorgungsnetz 10 Leistung zu, um die Spannung im Stromversorgungsnetz 10 konstant zu halten. Gleichzeitig wird auch Leistung zugeführt, wenn beispielsweise in dem Stromversorgungsnetz 10 eine Aufschaltung einer Last erfolgt oder beispielsweise ein Energieerzeuger im Stromversorgungsnetz 10 abgeschaltet wird.

Ferner wird bei dem erfindungsgemäßen System dem Stromversorgungsnetz 10 Leistung entnommen, wenn beispielsweise in diesem ein Lastabwurf oder eine Aufschaltung eines Energieerzeugers erfolgt, welche dazu führen würden, daß die Spannung im Stromversorgungsnetz 10 über die gewünschte Spannung ansteigen würde.

Die Leistungsentnahme und Leistungszufuhr über das Umformersystem 20 erfolgt einerseits durch Steuerung der von der Umformermaschine 22 erzeugten Spannung dadurch, daß der Spannungsregler 36 die Spannung im Stromversorgungsnetz 10 erfaßt und mit dem im Sollwertgeber 38 vorgegebenen Sollwert vergleicht. Dementsprechend erfolgt eine Ansteuerung der Erregung in der Erregerwicklung 30 im Läufer 28.

Zusätzlich erfaßt der Frequenzregler 82 die Spannung im Stromversorgungsnetz 10 und die Spannung im Stromeinspeisenetz 14 sowie den Strom im Gleichstromzwischenkreis 48 und steuert dementsprechend die Zündeinrichtungen 86 und 88 der Umrichter 44 und 46 so, daß der Umrichterkreis 42 aufgrund des mit der zweiten Drehstromwicklung 26 verbundenen Umrichters 44 über die Umformermaschine 22 aus dem Stromversorgungsnetz 10 Wirkleistung entnimmt und über die Synchronmaschine 52 in dem Schwungrad 54 speichert, das heißt das Schwungrad 54 auf eine höhere Drehzahl beschleunigt, oder so, daß der Umrichterkreis 42 aus dem Schwungradspeicher 50 durch Abbremsen des Schwungrads 54 mittels der Synchronmaschine 52 Wirkleistung entnimmt und über die Umformermaschine 22 dem Stromversorgungsnetz 10 zuführt.

Aufgrund der Tatsache, daß der Schwungradspeicher 50 eine hohe Wechsellastfestigkeit aufweist, besteht damit die Möglichkeit, auch innerhalb sehr kurzer Zyklen Wirkleistung aus dem Stromversorgungsnetz 10 zu entnehmen oder diesem zuzuführen.

Bei jeder Art der Stabilisierung des Stromversorgungsnetzes 10 führt die Umformermaschine 22 dem Stromversorgungsnetz 10 nicht nur Wirkleistung zu oder entnimmt diese aus diesem, sondern führt zusätzlich Blindleistung zu oder entnimmt diese daraus, so daß die Möglichkeit besteht, große Spannungsschwankungen, vorzugsweise Spannungsschwankungen von bis zu 50 %, bei relativ geringer Entnahme oder Zufuhr von Wirkleistung auszugleichen, da die Umformermaschine 22 in der Lage ist, zusätzlich zur Wirkleistung sehr hohe Blindleistungen dem Stromversorgungsnetz 10 zuzuführen oder aus diesen zu entnehmen, diese dann zu der vom Stromeinspeisenetz 14 nach wie vor zugeführten Spannung so addieren, daß im Stromversorgungsnetz 10 die Spannung im wesentlichen konstant gehalten wird.

Zusätzlich ist noch zwischen dem Stromeinspeisenetz 14 und der Drossel 12 ein Schalter 16 vorgesehen, welcher bei einem Zusammenbruch der Spannung des Stromeinspeisenetzes geöffnet wird. Damit kann beispielsweise bei einem Kurzschluß im Stromeinspeisenetz ein unnötiger Leistungsverbrauch durch den Kurzschluß vermieden werden.

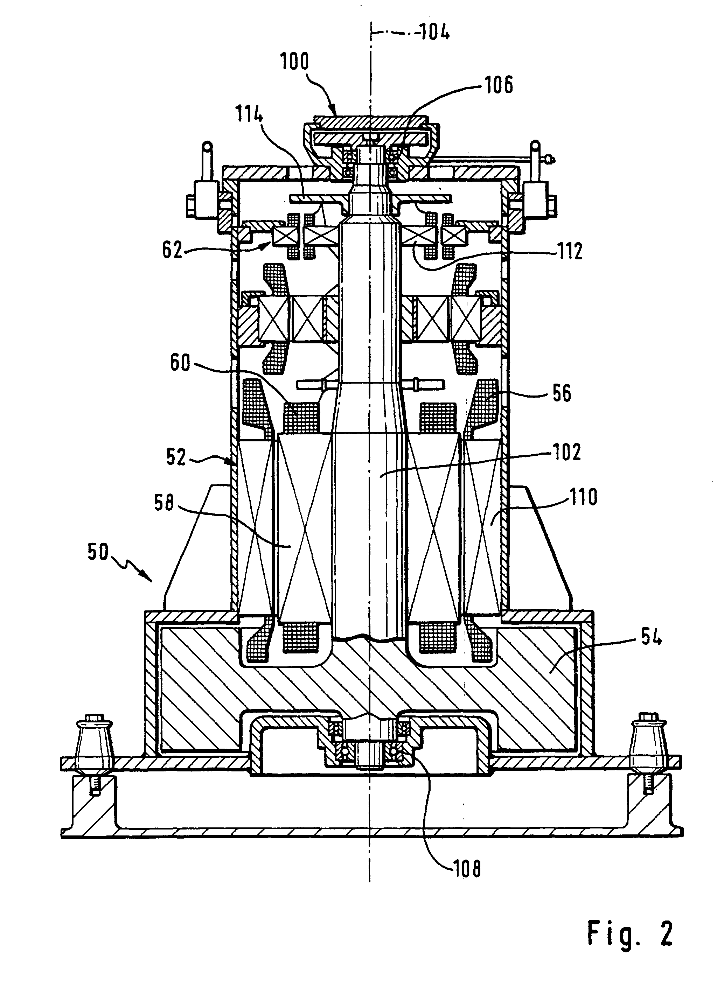

Wie in Fig. 2 dargestellt, sieht eine vorteilhafte Ausführungsform des erfindungsgemäßen Schwungradspeichers 50 vor, daß das Schwungrad 54 selbst hängend angeordnet ist und zwar in einem als Ganzes mit 100 bezeichneten passiven Magnetlager, welches eine vorzugsweise einstückig mit dem Schwungrad 54 verbundene Schwungradwelle 102 in Richtung ihrer Achse 104 hängend fixiert, wobei zusätzlich die Schwungradwelle 102 in dem Magnetlager 100 benachbarten Radiallager 106 und an einem unteren Ende der Schwungradwelle 102 angeordneten Radiallagern 108 gelagert ist, wobei die Radiallager 106 und 108 vorzugsweise mechanische Lager sind, die lediglich geringen Belastungen ausgesetzt sind.

Zwischen dem Magnetlager 100 und dem Schwungrad 54 sitzt unmittelbar auf der Schwungradwelle der Läufer 58 der Synchronmaschine 52 und ist von einem Ständer 110 der Synchronmaschine 52 umgeben, in welchem die Drehstromwicklung 56 angeordnet ist.

Ferner sitzt zwischen dem Magnetlager 100 und der Synchronmaschine 52 die Erregermaschine 62, wobei ein Läufer 112 derselben ebenfalls auf der Schwungradwelle 102 sitzt und mit einem ebenfalls auf der Schwungradwelle 102 sitzenden mitrotierenden Gleichrichter 114 verbunden ist, welcher den Gleichstrom für die Erregerwicklung 60 des Läufers 58 liefert.

Bei dem in Fig. 2 dargestellten Schwungradspeicher 50 sitzt das Schwungrad 54 nahe eines unteren Endes der Schwungradwelle 102, welches in dem Radiallager 108 gelagert ist. Ferner ist das Schwungrad 54 in einer die Reibung reduzierenden Gasatmosphäre, vorzugsweise bei Unterdruck, gelagert.

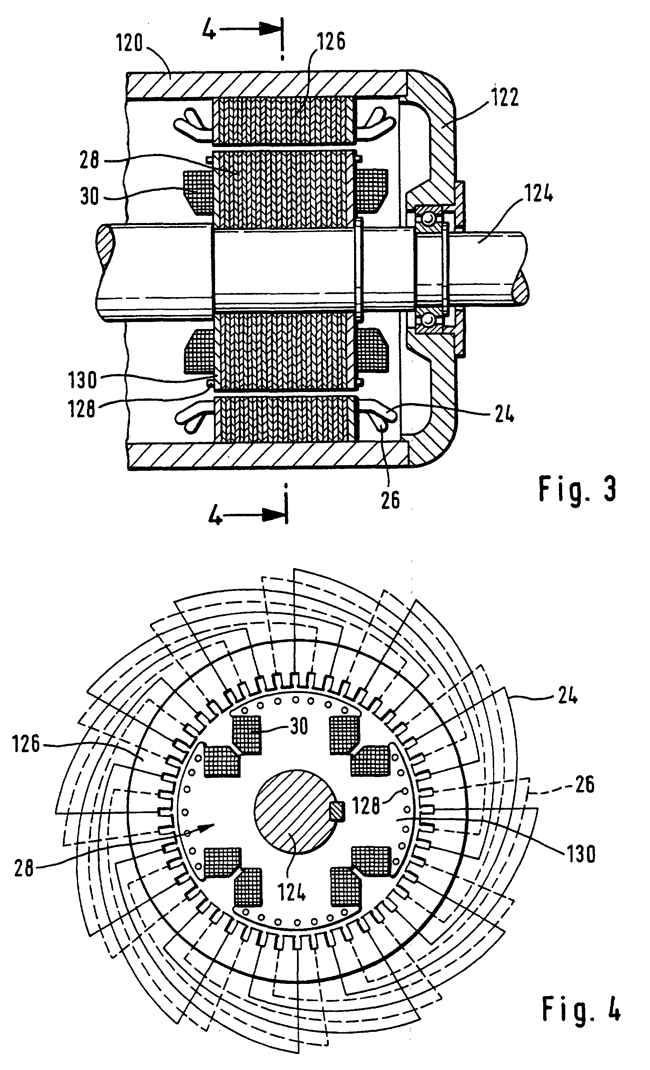

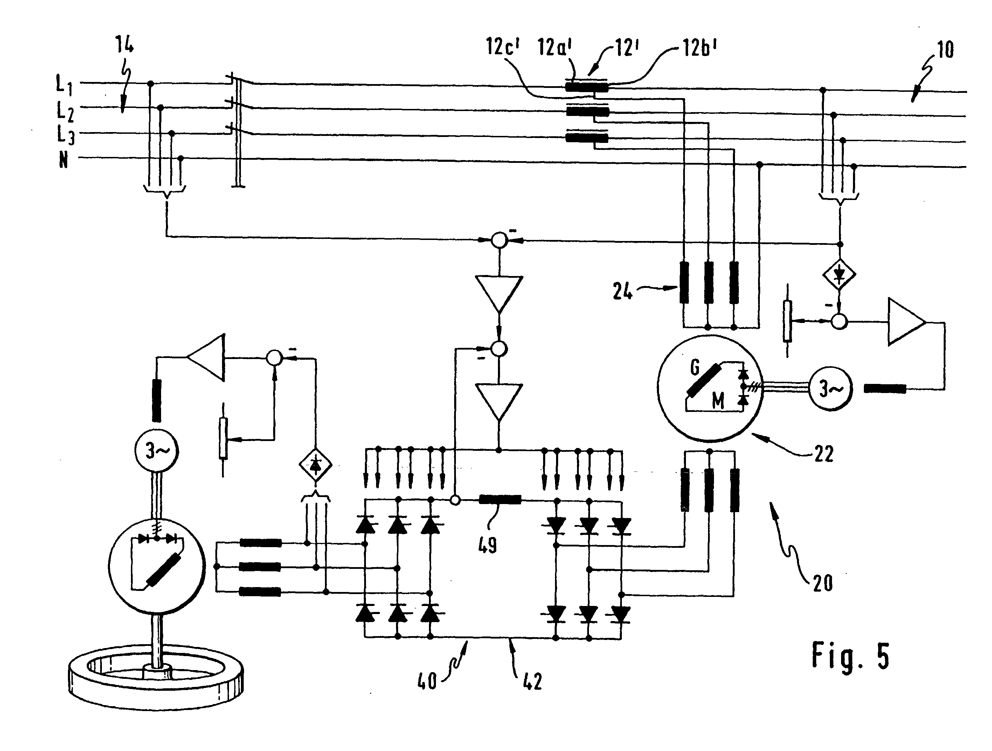

Ein bevorzugtes Ausführungsbeispiel einer erfindungsgemäßen Umformermaschine, dargestellt in den Fig. 3 und 4 umfaßt ein Gehäuse 120 mit Lagerschilden 122, in welchen eine Welle 124 drehbar gelagert ist. Die Welle 124 trägt dabei den Läufer 28 mit der Erregerwicklung 30.

Ferner ist in dem Gehäuse 120 ein als Ganzes mit 126 bezeichnetes Ständerpaket angeordnet, in welches, wie in Fig. 4 dargestellt, sowohl die erste Drehstromwicklung 24 als auch die zweite Drehstromwicklung 26 eingewickelt sind und zwar so, daß die erste Drehstromwicklung 24 und die zweite Drehstromwicklung 26 identisch ausgebildet sind und jeweils um eine Nutteilung relativ zueinander versetzt im Ständerpaket 126 liegen. Die Wicklungsstränge der ersten Drehstromwicklung 24 sind dabei in Fig. 4 mit voll ausgezogenen Linien dargestellt, während die Wicklungsstränge der Drehstromwicklung 26 in Fig. 4 gestrichelt wiedergegeben sind. Die Drehstromwicklungen 24 und 26 sind dabei in Fig. 4 an einer Maschine in vierpoliger-dreiphasiger Ausführung mit einem verkürzten Wickelschritt von 5/6 Polteilung und aus Gründen der Einfachheit in Form einer Einschichtwicklung dargestellt.

Ferner ist der Läufer 28 noch mit Dämpfungswicklungen in Form von Dämpferstäben 128 versehen, welche im Bereich von stirnseitigen Enden des Läufers 28 durch Kurzschlußbleche 130 kurzgeschlossen sind. Durch diese Dämpferwicklungen im Läufer 28 werden alle Oberwellen der an der ersten Drehstromwicklung 24 anliegenden Spannung wirkungsvoll kurzgeschlossen und damit im Fluß eliminiert. Somit besteht die Möglichkeit, nur die Grundfrequenz von der ersten Drehstromwicklung 24 auf die zweite Drehstromwicklung 26 zu übertragen.

Durch den Läufer 28 wird das umlaufende magnetische Feld der ersten Drehstromwicklung 22 mitgenommen, wobei im Fall einer als Synchronmaschine ausgebildeten Umformermaschine die Mitnahme des Läufers synchron erfolgt. Ferner tritt bei der Umformermaschine 22 keine Umwandlung der der ersten Drehstromwicklung 24 zugeführten Leistung in mechanische Energie auf. Es erfolgt vielmehr eine direkt transformatorische Übertragung der elektrischen Energie durch Flußverkettung zwischen den beiden Drehstromwicklungen 24 und 26.

Vorzugsweise erfolgt die Auslegung der Umformermaschine entsprechend den addierten Leistungen der ersten und zweiten Drehstromwicklungen 24 bzw. 26, das heißt für die doppelte Leistung für die bei einer bekannten Eingehäusemaschine gleicher Leistung jeweils Motor und Generator auszulegen sind. Dadurch kommt es zu einer wesentlichen Verringerung des Leistungsgewichts und darüber hinaus zu einer Erhöhung des Wirkungsgrads.

Bei Ausbildung der Umformermaschine 22 als Synchronmaschine gibt die erste Drehstromwicklung 24 eine von Lastschwankungen im Stromversorgungsnetz 10 unabhängige konstante sinusförmige Spannung ab, die unbeeinflußt von allen Vorgängen im Stromeinspeisenetz 14 bleibt, wobei der Spannungsregler 36 dafür sorgt, daß der magnetische Fluß der Umformermaschine über die Gleichstromerregung des Läufers 28 so erfolgt, daß die Spannung in der ersten Drehstromwicklung 24 im wesentlichen konstant bleibt.

Im übrigen wird hinsichtlich der Beschreibung weiterer Merkmale der eines vorteilhaften Ausführungsbeispiels der eingesetzten Umformermaschine auf die europäische Patentanmeldung 0 071 852 vollinhaltlich Bezug genommen, die weitere Einzelheiten einer derartigen Umformermaschine offenbart.

Bei einem zweiten Ausführungsbeispiel des erfindungsgemäßen Systems, dargestellt in Fig. 5, sind diejenigen Teile, die mit denen des ersten Ausführungsbeispiels identisch sind, mit denselben Bezugszeichen versehen, so daß hinsichtlich deren Beschreibung vollinhaltlich auf die Beschreibung des ersten Ausführungsbeispiels verwiesen werden kann.

Im Gegensatz zum ersten Ausführungsbeispiel ist bei dem zweiten Ausführungsbeispiel gemäß Fig. 5 die Drossel 12' nicht als einfache Drossel ausgebildet, sondern als Koppeldrossel mit einer dem Stromeinspeisenetz 14 zugewandten ersten Wicklung 12a', einer dem Stromversorgungsnetz 10 zugewandten zweiten Wicklung 12b' und einem Zwischenabgriff 12c', welcher mit der ersten Drehstromwicklung 24 der Umformermaschine 22 des Umformersystems 20 verbunden ist. Eine derartige Koppeldrossel 12' hat den Vorteil, daß mit dieser auch Kurzschlüsse im Stromeinspeisenetz 14 durch das Umformersystem 20 beherrschbar sind und die Möglichkeit eröffnet wird, mittels des Umformersystems 20 in dem Stromversorgungsnetz 10 auch bei derartigen Kurzschlüssen die Spannung im wesentlichen konstant zu halten. Insbesondere ist dies dann vorteilhafterweise möglich, wenn die Gegenreaktanz zwischen den Wicklungen 12a' und 12b' ungefähr der subtransienten Reaktanz der Umformermaschine 22 entspricht, und somit die Gegenreaktanz im Fall eines Kurzschlusses im Stromeinspeisenetz 14 einen Spannungsabfall der Umformermaschine aufgrund von deren Innenwiderstand ausgleicht.

Im übrigen ist das zweite Ausführungsbeispiel gemäß Fig. 5 mit dem ersten Ausführungsbeispiel identisch, so daß diesbezüglich voll inhaltlich auf die Ausführungen zum ersten Ausführungsbeispiel Bezug genommen werden kann.

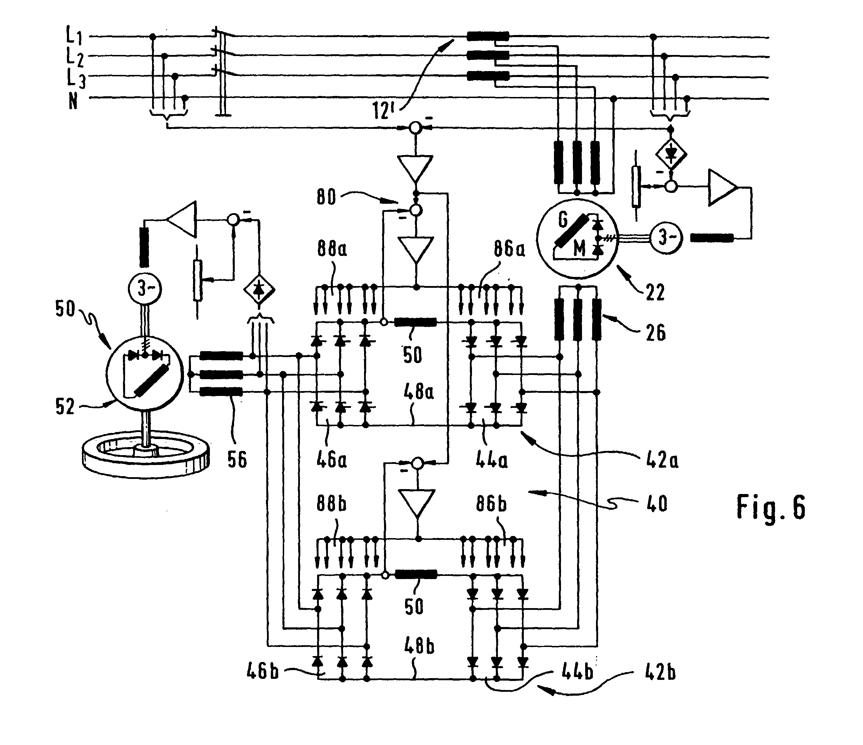

Bei einem dritten Ausführungsbeispiel des erfindungsgemäßen Systems, dargestellt in Fig. 6, sind ebenfalls diejenigen Elemente, die mit denen der ersten Ausführungsbeispiels und des zweiten Ausführungsbeispiels identisch sind, mit denselben Bezugszeichen versehen, so daß hinsichtlich der Beschreibung dieser Elemente auf die Ausführungen zu den vorangehenden Ausführungsbeispielen verwiesen werden kann. Im Gegensatz zu den vorangehenden Ausführungsbeispielen umfaßt allerdings das Umrichtersystem 40 zwei parallel zueinander angeordnete Umrichterkreise 42a und 42b, wobei jeder der Umrichterkreise einen Umrichter 44a, 44b aufweist, welcher mit der zweiten Drehstromwicklung 26 verbunden ist und einen Umrichter 46a, 46b, welcher mit der Drehstromwicklung 56 der Synchronmaschine 52 des Schwungradspeichers 50 verbunden ist. Ferner sind in beiden Umrichterkreisen 42a und 42b die beiden Umrichter 44a, 46a bzw. 44b, 46b über Gleichstromzwischenkreis 48a bzw. 48b miteinander gekoppelt.

Die Steuerung 80 ist dabei so ausgebildet, daß sie in der Lage ist, die Zündeinrichtungen 86a, 88a bzw. 86b, 88b in den beiden Umrichterkreisen 42a, b anzusteuern.

Vorzugsweise sind die beiden Umrichterkreis 42a, 42b so ausgebildet, daß sie in der Lage sind, jeweils ungefähr die halbe maximal mögliche Wirkleistung zu schalten. Beispielsweise ist der Umrichterkreis 42a von der Steuerung 80 primär so betrieben, daß dieser zur Kopplung von Wirkleistung von der Umformermaschine zum Schwungradspeicher 50 einsetzbar ist, während der Umrichterkreis 42b primär so betrieben wird, daß dieser zum Koppeln von Wirkleistung von dem Schwungradspeicher 50 zur Umformermaschine 22 einsetzbar ist. Dies ist ausreichend, so lange jeweils maximal die Hälfte der maximal möglichen Wirkleistung zwischen der Umformermaschine 22 und dem Schwungradspeicher 52 zu schalten ist. Bis zu dieser halben maximalen Wirkleistung bietet die Lösung gemäß dem dritten Ausführungsbeispiel den Vorteil, daß die Schaltzeiten schneller werden, da ein Umsteuern der Umrichter 44a, 46a bzw. 44b, 46b nicht erforderlich ist, sondern die beiden Umrichterkreise 42a und 42b aufgrund ihrer Grundeinstellung durch die Steuerung jeweils in entgegengesetzten Richtungen betrieben werden.

Ist jedoch die maximale Wirkleistung vom Schwungradspeicher 50 zur Umformermaschine 22 oder umgekehrt zu koppeln, so wird derjenige Umrichterkreis 42a oder 42b, welcher in seiner Grundeinstellung in der entgegengesetzten Richtung arbeitet, von der Steuerung 80 umgesteuert, so daß in diesem Fall beide Umrichterkreise 42a, 42b parallel arbeiten.

Die Umsteuerbarkeit der Umrichter 44a, b, 46a, b hat ferner noch den Vorteil, daß bis zur halben Wirkleistung ein redundantes System zur Verfügung steht, da bei Ausfall einer der Umrichterkreise 42a, 42b der andere Umrichterkreis 42b, 42a durch Umsteuern der Umrichter zwischen Gleichrichterfunktion und Wechselrichterfunktion zum Übertragen von Wirkleistung in beiden Richtungen einsetzbar ist.

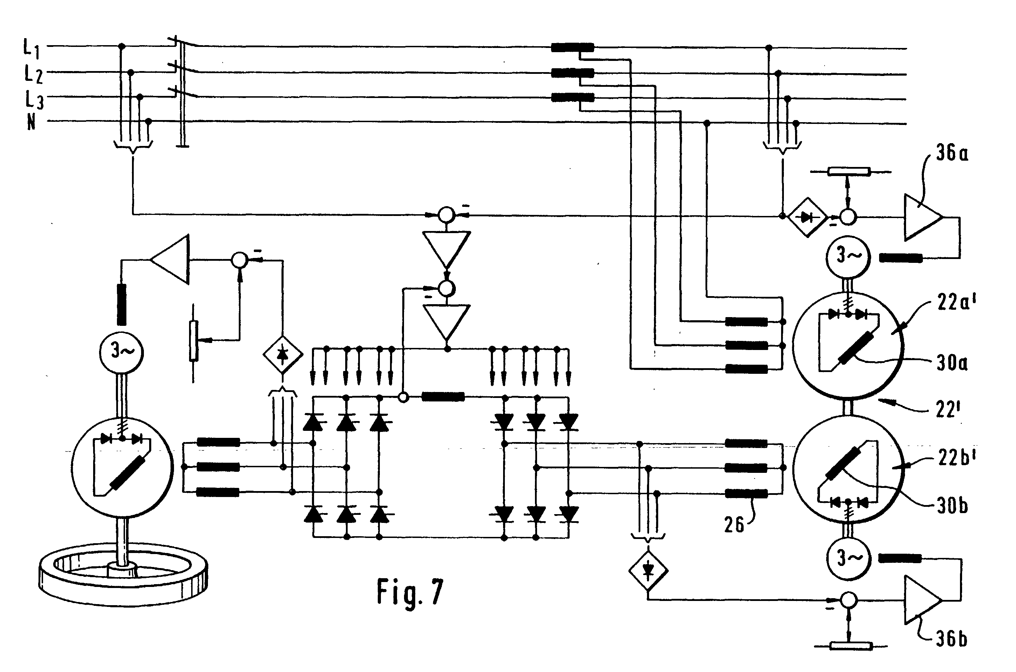

Bei einem vierten Ausführungsbeispiel eines erfindungsgemäßen Systems, dargestellt in Fig. 7, ist die Umformermaschine 22' in Form zweier getrennter Synchronmaschinen 22a' und 22b' ausgebildet, wobei jede dieser Synchronmaschinen eine Erregerwicklung 30a bzw., 30b aufweist und jede Erregerwicklung über einen hierfür vorgesehenen Spannungsregler 36a bzw. 36b regelbar ist. Im Fall des Spannungsreglers 36b erfolgt eine Regelung entsprechend der in der zweiten Drehstromwicklung 26 auftretenden Spannung.

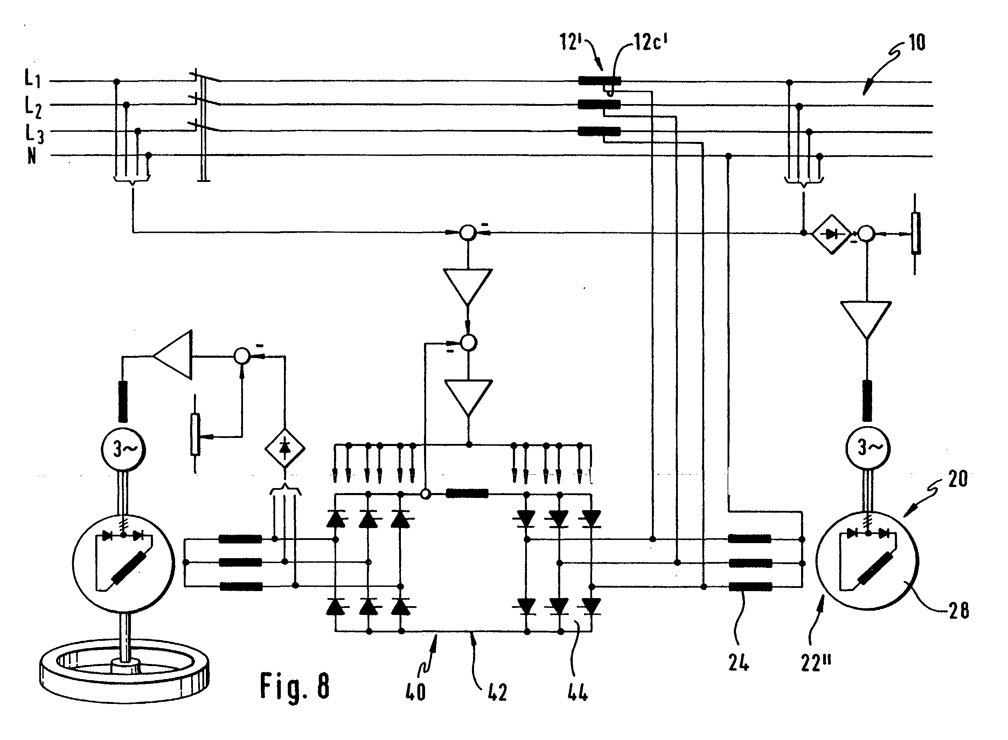

Bei einem fünften Ausführungsbeispiel, dargestellt in Fig. 8, ist die Umformermaschine 22'' in Form einer vereinfachten Maschine ausgebildet und weist lediglich die Drehstromwicklung 24 auf, die sowohl mit dem Zwischenabgriff 12c' der Koppeldrossel 12' verbunden ist als auch mit dem Umrichter 44 des Umrichterkreises 42, so daß die zweite Drehstromwicklung 26 entfallen kann und gleichzeitig durch die erste Drehstromwicklung 24 gebildet ist.

Das erfindungsgemäße System zur Stabilisierung der Spannung in dem Stromversorgungsnetz 10 kann vorzugsweise auch dazu eingesetzt werden, als unterbrechungsfreie Stromversorgung zu arbeiten. Vorzugsweise ist der Schwungradspeicher 50 so dimensioniert, daß dessen Energie ausreicht, um die Spannung in dem Spannungsversorgungsnetz 10 bei einem Ausfall des Stromeinspeisenetzes 14 für einen Zeitraum von bis zu 10 Sekunden aufrecht zu erhalten. Da 97 % aller üblichen Netzausfälle im Stromeinspeisenetz in Zeiträumen liegen, die kürzer sind als 10 Sekunden, reicht die Energie im Schwungradspeicher 50 für 97 % aller Ausfälle des Stromeinspeisenetzes 14.

Dauert der Ausfall des Stromeinspeisenetzes länger als 10 Sekunden, so kann bei einer Ausführungsform des erfindungsgemäßen Systems eine zusätzliche Steuerung vorgesehen sein, welche zum Abschalten des Stromversorgungsnetzes dient.

Alternativ dazu ist es denkbar, die Umformermaschine 22 mit einem Dieselaggregat zu koppeln und im Fall eines Ausfalles des Stromeinspeisenetzes 14 von mehr als 10 Sekunden das Dieselaggregat zu starten, das dann den Läufer 28 der Umformermaschine 22 antreibt, um die Spannung im Stromversorgungsnetz 10 über einen längeren Zeitraum sicherzustellen. In diesem Fall dient die im Schwungradspeicher 50 gespeicherte Energie dazu, bei einem derartigen Ausfall des Stromeinspeisenetzes 14 zunächst den Zeitraum zu überbrücken, bis das Dieselaggregat die volle Leistung erreicht hat.

Sobald das Dieselaggregat primär den Antrieb des Läufers 28 übernommen hat, dient das Umrichtersystem 40 mit dem Schwungradspeicher 50 weiterhin in der bereits vorstehend beschriebenen Art und Weise dazu, die Spannung im Stromversorgungsnetz zu stabilisieren, beispielsweise bei Lastsprüngen im Stromversorgungsnetz und dabei das Dieselaggregat zu unterstützen.

## Patentansprüche

1. System zur Stabilisierung eines Stromversorgungsnetzes umfassend
eine Drossel (12), welche das Stromversorgungsnetz (10) mit einem Stromeinspeisenetz (14) verbindet,
ein an das Stromversorgungsnetz (10) angeschlossenes Umformersystem (20) mit einer einen Läufer (28) und mindestens eine Drehstromwicklung (24) aufweisenden Umformermaschine (22),
daß das Umformersystem (20) einen Schwungradspeicher (50) mit einer elektrischen Maschine (52) und einem mit dieser gekoppelten Schwungrad (54) umfaßt,
daß in dem Umformersystem (20) der Schwungradspeicher (50) so mit der Umformermaschine (22) elektrisch gekoppelt ist, daß der Schwungradspeicher (50) Leistung von der Umformermaschine (22) aufnehmen oder an diese abgeben kann,
**dadurch gekennzeichnet, daß** das Umformersystem (20) ein Umrichtersystem (40) aufweist, das eine Drehstromwicklung (24, 26) der Umformermaschine (22) mit einer Synchronmaschine (52) des Schwungradspeichers (50) elektrisch koppelt,
und daß eine Steuerung (80) vorgesehen ist, welche die Spannung des Stromversorgungsnetzes (10) und des Stromeinspeisenetzes (14) erfaßt und das Umrichtersystem (40) so ansteuert, daß die Umformermaschine (22) durch Leistungsaufnahme oder Leistungsabgabe die Spannung des Stromversorgungsnetzes (10) auf einen vorgebbaren Wert stabilisiert.

2. System nach Anspruch 1, **dadurch gekennzeichnet, daß** das Umrichtersystem (40) mindestens einen Umrichterkreis (42) mit zwei über einen Gleichstromzwischenkreis (48) gekoppelten Umrichtern (44, 46) umfaßt.

3. System nach einem der voranstehenden Ansprüche, **dadurch gekennzeichnet, daß** jeder der Umrichter (44, 46) zwischen einer Gleichrichterfunktion und einer Wechselrichterfunktion umsteuerbar ist.

4. System nach Anspruch 3, **dadurch gekennzeichnet, daß** die Umrichter (44, 46) durch die Steuerung (80) so ansteuerbar sind, daß in einem Umrichterkreis (42) einer der Umrichter (44, 46) in Gleichrichterfunktion und der andere (46, 44) Wechselrichterfunktion arbeitet.

5. System nach einem der Ansprüche 2 bis 4 **dadurch gekennzeichnet, daß** das Umrichtersystem (40) mehrere parallel geschaltete Umrichterkreise (42a, b) umfaßt.

6. System nach Anspruch 5, **dadurch gekennzeichnet, daß** die Umrichter (44, 46) eines Umrichterkreises (42) von der Steuerung (80) bevorzugt zur Leistungsabgabe an die Umformermaschine (22) oder Leistungsaufnahme von der Umformermaschine (22) einsetzbar sind.

7. System nach einem der Ansprüche 2 bis 6, **dadurch gekennzeichnet, daß** in dem Gleichstromzwischenkreis (48) jedes Umrichterkreises (42) eine Drossel (49) angeordnet ist.

8. System nach einem der voranstehenden Ansprüche, **dadurch gekennzeichnet, daß** die Drossel zwischen dem Stromeinspeisenetz und dem Stromversorgungsnetz als Koppeldrossel (12) ausgebildet ist und daß die Umformermaschine (22) mit einem Zwischenabgriff (12c) der Koppeldrossel (12') verbunden ist.

9. System nach Anspruch 8, **dadurch gekennzeichnet, daß** die Gegenreaktanz der Koppeldrossel (12') ungefähr der subtransienten Reaktanz der Umformermaschine (22) entspricht.

10. System nach einem der voranstehenden Ansprüche, **dadurch gekennzeichnet, daß** die von der Umformermaschine (22) erzeugte Spannung über eine Erregerwicklung (30) des Läufers (28) steuerbar ist.

11. System nach Anspruch 10 **dadurch gekennzeichnet, daß** die Erregerwicklung (30) bürstenlos erregbar ist.

12. System nach einem der voranstehenden Ansprüche, **dadurch gekennzeichnet, daß** die Erregung der Umformermaschine (22) entsprechend der Spannung im Stromversorgungsnetz (10) gesteuert ist.

13. System nach einem der voranstehenden Ansprüche, **dadurch gekennzeichnet, daß** die Umformermaschine (22) eine einzige Drehstromwicklung (24) aufweist, welche mit dem Stromversorgungsnetz (10) und mit dem Umrichtersystem (40) verbunden ist.

14. System nach einem der Ansprüche 1 bis 12, **dadurch gekennzeichnet, daß** die Umformermaschine (22) eine erste und eine zweite Drehstromwicklung (24, 26) aufweist.

15. System nach Anspruch 14, **dadurch gekennzeichnet, daß** die erste Drehstromwicklung (24) und die zweite Drehstromwicklung (26) dieselbe Polzahl aufweisen.

16. System nach Anspruch 14 oder 15, **dadurch gekennzeichnet, daß** die erste Drehstromwicklung (24) und die zweite Drehstromwicklung (26) in einem gemeinsamen Ständerpaket (126) angeordnet sind.

17. System nach Anspruch 16, **dadurch gekennzeichnet, daß** die erste Drehstromwicklung (24) und die zweite Drehstromwicklung (26) in gesonderten Nuten angeordnet sind.

18. System nach einem der voranstehenden Ansprüche, **dadurch gekennzeichnet, daß** der Läufer (28) eine Dämpferwicklung (128) aufweist.

19. System nach einem der voranstehenden Ansprüche, **dadurch gekennzeichnet, daß** der Schwungradspeicher (50) ein um eine vertikale Achse (104) rotierendes Schwungrad (54) aufweist.

20. System nach Anspruch 19, **dadurch gekennzeichnet, daß** das Schwungrad (54) in einem Lager (100) hängend angeordnet ist.

21. System nach Anspruch 20, **dadurch gekennzeichnet, daß** das Lager (100) als Magnetlager ausgebildet ist.

22. System nach einem der voranstehenden Ansprüche **dadurch gekennzeichnet, daß** ein Läufer (58) der Synchronmaschine (52) auf einer Welle (102) des Schwungrades (54) sitzt.

23. System nach Anspruch 22, **dadurch gekennzeichnet, daß** das Schwungrad (54) auf einer dem Magnetlager (100) gegenüberliegenden Seite des Läufers (58) angeordnet ist.

24. System nach einem der voranstehenden Ansprüche, **dadurch gekennzeichnet, daß** der Synchronmaschine (52) eine Erregermaschine (62) zugeordnet ist.

25. System nach einem der voranstehenden Ansprüche, **dadurch gekennzeichnet, daß** das Umformersystem (20) bei Ausfall einer Stromeinspeisung durch das Stromeinspeisenetz (14) die gesamte im Stromversorgungsnetz (10) verbrauchte Leistung liefert

26. System nach Anspruch 25, **dadurch gekennzeichnet, daß** die Umformermaschine (22) mit einem motorischen Antrieb antreibbar ist, um einen Ausfall des Stromeinspeisenetzes (14) zu überbrücken.

## Claims

1. System for stabilizing a power supply system comprising
a choke (12) for connecting the power supply system (10) to a mains power feed (14),
a converter system (20) connected to the power supply system (10) and having a converter machine (22) with a rotor (28) and at least one three-phase winding (24),
that the converter system (20) comprises a flywheel storage means (50) with an electric machine (52) and a flywheel (54) coupled thereto,
that in the converter system (20) the flywheel storage means (50) is electrically coupled to the converter machine (22) such that the flywheel storage means (50) can draw power from the converter machine (22) or supply power to it,
**characterized in that** the converter system (20) has a static converter system (40) coupling a three-phase winding (24, 26) of the converter machine (22) electrically to a synchronous machine (52) of the flywheel storage means (50),
and that a control (80) is provided for detecting the voltage of the power supply system (10) and of the mains power feed (14) and controlling the static converter system (40) such that the converter machine (22) stabilizes the voltage of the power supply system (10) to a predeterminable value by drawing or supplying power.

2. System as defined in claim 1, **characterized in that** the static converter system (40) comprises at least one static converter circuit (42) with two static converters (44, 46) coupled via a direct current link (48).

3. System as defined in any one of the preceding claims, **characterized in that** each of the static converters (44, 46) is adapted to be switched between a rectifier function and an inverter function.

4. System as defined in claim 3, **characterized in that** the static converters (44, 46) are controllable by the control (80) such that in one static converter circuit (42) one of the static converters (44, 46) operates in a rectifier function and the other (46, 44) in an inverter function.

5. System as defined in any one of claims 2 to 4, **characterized in that** the static converter system (40) comprises several static converter circuits (42a, b) connected in parallel.

6. System as defined in claim 5, **characterized in that** the static converters (44, 46) of one static converter circuit (42) are adapted to be used by the control (80) preferably for supplying power to the converter machine (22) or drawing power from the converter machine (22).

7. System as defined in any one of claims 2 to 6, **characterized in that** a choke (49) is arranged in the direct current link (48) of each static converter circuit (42).

8. System as defined in any one of the preceding claims, **characterized in that** the choke between the mains power feed and the power supply system is designed as a coupling choke (12) and that the converter machine (22) is connected to an intermediate tap (12c) of the coupling choke (12').

9. System as defined in claim 8, **characterized in that** the counterreactance of the coupling choke (12') corresponds approximately to the subtransient reactance of the converter machine (22).

10. System as defined in any one of the preceding claims, **characterized in that** the voltage generated by the converter machine (22) is adapted to be controlled via an exciter winding (30) of the rotor (28).

11. System as defined in claim 10, **characterized in that** the exciter winding (30) is adapted to be excited in a brushless manner.

12. System as defined in any one of the preceding claims, **characterized in that** the excitation of the converter machine (22) is controlled in accordance with the voltage in the power supply system (10).

13. System as defined in any one of the preceding claims, **characterized in that** the converter machine (22) has a single three-phase winding (24) connected to the power supply system (10) and to the static converter system (40).

14. System as defined in any one of claims 1 to 12, **characterized in that** the converter machine (22) has a first and a second three-phase winding (24, 26).

15. System as defined in claim 14, **characterized in that** the first three-phase winding (24) and the second three-phase winding (26) have the same number of poles.

16. System as defined in claim 14 or 15, **characterized in that** the first three-phase winding (24) and the second three-phase winding (26) are arranged in a common stator pack (126).

17. System as defined in claim 16, **characterized in that** the first three-phase winding (24) and the second three-phase winding (26) are arranged in separate slots.

18. System as defined in any one of the preceding claims, **characterized in that** the rotor (28) has an attenuator winding (128).

19. System as defined in any one of the preceding claims, **characterized in that** the flywheel storage means (50) has a flywheel (54) rotating about a vertical axis (104).

20. System as defined in claim 19, **characterized in that** the flywheel (54) is arranged in a suspended manner in a bearing (100).

21. System as defined in claim 20, **characterized in that** the bearing (100) is designed as a magnetic bearing.

22. System as defined in any one of the preceding claims, **characterized in that** a rotor (58) of the synchronous machine (52) is seated on a shaft (102) of the flywheel (54).

23. System as defined in claim 22, **characterized in that** the flywheel (54) is arranged on a side of the rotor (58) located opposite the magnetic bearing (100).

24. System as defined in any one of the preceding claims, **characterized in that** an exciting machine (62) is associated with the synchronous machine (52).

25. System as defined in any one of the preceding claims, **characterized in that** the converter system (20) supplies the entire power consumed in the power supply system (10) during any failure of the mains power feed (14) to supply power.

26. System as defined in claim 25, **characterized in that** the converter machine (22) is adapted to be driven by a motor drive in order to bridge any failure of the mains power feed (14).

## Revendications

1. Système pour la stabilisation d'un réseau d'alimentation en puissance comprenant
une bobine (12), qui relie le réseau d'alimentation en puissance (10) à un réseau d'alimentation en courant (14),
un système convertisseur (20), raccordé au réseau d'alimentation en puissance (10), avec une machine de conversion (22) comprenant un rotor (28) et au moins un enroulement pour courant triphasé (24),
le système convertisseur (20) comprenant un accumulateur à volant (50) avec une machine électrique (52) et un volant (54) couplé à celle-ci,
l'accumulateur à volant (50) dans le système convertisseur (20) étant couplé électriquement à la machine de conversion (22) de sorte que l'accumulateur à volant (50) puisse recevoir de l'énergie de la machine de conversion (22) ou en fournir à celle-ci,
**caractérisé en ce que** le système convertisseur (20) présente un système changeur de fréquence (40) qui couple électriquement un enroulement pour courant triphasé (24, 26) de la machine de conversion (22) à une machine de synchronisation (52) de l'accumulateur à volant (50),
et **en ce qu'**il est prévu une commande (80) qui détecte la tension du réseau d'alimentation en puissance (10) et du réseau d'alimentation en courant (14), et qui commande le système changeur de fréquence (40) de sorte que la machine de conversion (22) stabilise, à une valeur pouvant être prédéfinie, la tension du réseau d'alimentation en puissance (10) par le biais d'une consommation d'énergie ou d'une fourniture d'énergie.

2. Système selon la revendication 1, **caractérisé en ce que** le système changeur de fréquence (40) comprend au moins un circuit changeur de fréquence (42) ayant deux changeurs de fréquence (44, 46) couplés par le biais d'un circuit intermédiaire à courant continu (48).

3. Système selon l'une quelconque des,revendications précédentes, **caractérisé en ce que** chaque changeur de fréquence (44, 46) peut être commandé pour fonctionner en tant que redresseur de courant ou en tant qu'onduleur.

4. Système selon la revendication 3, **caractérisé en ce que** les changeurs de fréquence (44, 46) peuvent être commandés par la commande (80) de sorte que, dans un circuit changeur de fréquence (42), un des changeurs de fréquence (44, 46) fonctionne en tant que redresseur de courant et l'autre (46, 44) en tant qu'onduleur.

5. Système selon l'une des revendications 2 à 4, **caractérisé en ce que** le système changeur de fréquence (40) comprend plusieurs circuits changeurs de fréquence (42a, b) branchés en parallèle.

6. Système selon la revendication 5, **caractérisé en ce que** les changeurs de fréquence (44, 46) d'un circuit changeur de fréquence (42) peuvent être mis en oeuvre par la commande (80) de préférence pour fournir de l'énergie à la machine de conversion (22) ou pour recevoir de l'énergie de la machine de conversion (22).

7. Système selon l'une des revendications 2 à 6, **caractérisé en ce qu'**une bobine (49) est disposée dans le circuit intermédiaire à courant continu (48) de chaque circuit changeur de fréquence (42).

8. Système selon l'une quelconque des revendications précédentes, **caractérisé en ce que** la bobine entre le réseau d'alimentation en courant et le réseau d'alimentation en puissance est conçue en tant que bobine de couplage (12) et que la machine de conversion (22) est reliée par un branchement intermédiaire (12c) à la bobine de couplage (12').

9. Système selon la revendication 8, **caractérisé en ce que** la contre-réactance de la bobine de couplage (12') correspond approximativement à la réactance subtransitoire de la machine de conversion (22).

10. Système selon l'une quelconque des revendications précédentes, **caractérisé en ce que** la tension générée par la machine de conversion (22) peut être commandée par un enroulement inducteur (30) du rotor (26).

11. Système selon la revendication 10, **caractérisé en ce que** l'enroulement inducteur (30) est excitable sans contact de balai.

12. Système selon l'une quelconque des revendications précédentes, **caractérisé en ce que** l'excitation de la machine de conversion (22) est commandée en fonction de la tension dans le réseau d'alimentation en puissance (10).

13. Système selon l'une quelconque des revendications précédentes, **caractérisé en ce que** la machine de conversion (22) présente un seul enroulement pour courant triphasé (24), lequel est relié au réseau d'alimentation en puissance (10) et au système changeur de fréquence (40).

14. Système selon l'une des revendications 1 à 12, **caractérisé en ce que** la machine de conversion (22) présente un premier et un deuxième enroulement pour courant triphasé (24, 26).

15. Système selon la revendication 14, **caractérisé en ce que** le premier enroulement pour courant triphasé (24) et le deuxième enroulement pour courant triphasé (26) présentent le même nombre de pôles.

16. Système selon la revendication 14 ou 15, **caractérisé en ce que** le premier enroulement pour courant triphasé (24) et le deuxième enroulement pour courant triphasé (26) sont disposés dans un même bloc de stator commun (126).

17. Système selon la revendication 16, **caractérisé en ce que** le premier enroulement pour courant triphasé (24) et le deuxième enroulement pour courant triphasé (26) sont disposés dans des encoches séparées.

18. Système selon l'une quelconque des revendications précédentes, **caractérisé en ce que** le rotor (28) présente un enroulement amortisseur (128).

19. Système selon l'une quelconque des revendications précédentes, **caractérisé en ce que** l'accumulateur à volant (50) présente un volant (54) tournant autour d'un axe vertical (104).

20. Système selon la revendication 19, **caractérisé en ce que** le volant (54) est disposé en suspension dans un palier (100).

21. Système selon la revendication 20, **caractérisé en ce que** le palier (100) est conçu en tant que palier magnétique.

22. Système selon l'une quelconque des revendications précédentes, **caractérisé en ce qu'**un rotor (58) de la machine de synchronisation (52) est fixé sur un arbre (102) du volant (54).

23. Système selon la revendication 22, **caractérisé en ce que** le volant (54) est disposé sur un côté du rotor (58) situé en face du palier magnétique (100).

24. Système selon l'une quelconque des revendications précédentes, **caractérisé en ce que** la machine de synchronisation (5) est associée à une machine d'excitation (62).

25. Système selon l'une quelconque des revendications précédentes, **caractérisé en ce que**, en cas de coupure de l'alimentation en courant par le réseau d'alimentation en courant (14), le système convertisseur (20) fournit la totalité de l'énergie consommée dans le réseau d'alimentation en puissance (10).

26. Système selon la revendication 25, **caractérisé en ce que** la machine de conversion (22) peut être entraînée par un entraînement motorisé afin de pallier à une coupure du réseau d'alimentation en courant (14).
